# EUROPEAN PATENT SPECIFICATION

(11) **EP 3 414 983 B1**
(45) Date of publication and mention of the grant of the patent: **18.08.2021**
(21) Application number: 18184572.8
(22) Date of filing: 28.02.2012
(51) Int. Cl.: A01N 25/00, A01N 25/24, A01C 1/06, C05G 5/30

(54) **SEED COATINGS, COATING COMPOSITIONS AND METHODS FOR USE**
SAMENBESCHICHTUNGEN, BESCHICHTUNGSZUSAMMENSETZUNGEN UND VERFAHREN ZU IHRER VERWENDUNG
ENROBAGES DE SEMENCES, COMPOSITIONS D'ENROBAGE ET PROCÉDÉS D'UTILISATION

(30) Priority: 28.02.2011 US 201161464117 P
(43) Date of publication of application: 19.12.2018
(62) Divisional of application: 12752733.1
(73) Proprietor: RHODIA OPERATIONS, 93306 Aubervilliers (FR)
(72) Inventor: CASTAING, Jean-Christophe, 92310 Sevres (FR); JI, Pengfei, Baoshan Distric, Shanghai 200435 (CN); CRISTOBAL, Galder, 267472 Singapore (SG); CHEN, Zhiyun, Newtown, PA 18940 (US)
(74) Representative: Elkington and Fife LLP

(56) References cited:
- EP-A1- 2 308 297
- WO-A1-99/57959
- WO-A1-2009/021986
- WO-A2-2008/144744
- US-A- 5 787 640
- US-A- 5 849 320
- US-A- 5 882 713
- US-A1- 2004 077 498
- DATABASE WPI Thomson Scientific, London, GB; AN 2011-F22641 XP002728459, & CN 101 999 415 A (UNIV CHINA OCEAN) 6 April 2011 (2011-04-06)
- DATABASE WPI Thomson Scientific, London, GB; AN 2001-273908 XP002728461, & JP 2001 069812 A (AGRITECNO YAZAKI CO LTD) 21 March 2001 (2001-03-21)

## Description

### Cross Reference to Related Applications

This application claims the benefit of U.S. Provisional Application Serial No. 61/464,117, filed February 28, 2011.

### Field of Invention

This invention relates to methods and compositions relating to agricultural coatings and, in particular, to seeds or agglomeration of seeds coated with cationic guar, and methods for use.

### Background of the Invention

Seeds are sometimes commercially treated to promote good seedling establishment. Protection of seeds and young seedlings from pests in and around the soil during the early stages of plant growth is one concern. Another concern is the protection of seeds and seedlings from drought or damage from lack of available water.

U.S. Patent No. 4,543,370 appears to describe seed coatings containing a cellulosic film-forming polymer, a pigment, a plasticizer, silica and a surfactant.

U.S. Patent Nos. 4,513,019 and 4,576,646 describe a process for coating seeds with a cellulosic film-forming composition, at least one alpha-cellulose, and a suitable plasticizer.
CN 101999415 describes the preparation of bioactive polysaccharide deed coatings comprising carrying out a biological technique and a coating technique to prepare the bioactive polysaccharide seed coating with antergic yeast.
JP 2001 69812 describes how to obtain the subject seed capable of being subjected to germination-promoting treatment, hardly damaging the bud or the root in the treatment after the germination, and hardly providing the fear of generation of disease such as blast neck rot by covering a brown rice formed into the nondisease state with a specific gel layer. A brown rice formed into the nondisease state with an aqueous gel layer to provide the objective seed. Preferably, the seed has a nearly spherical shape, and the aqueous gel layer contains an antiseptic added thereto. The aqueous solution or the like of sodium alginate, sodium polyacrylate or the like is cited as the aqueous solution for forming the aqueous gel. A divalent metal such as calcium and barium, aluminum or the like can be used as a metal ion for hardening the aqueous solution to form the aqueous gel.
WO 2009/021986 describes seed treatment compositions comprising active ingredient and hyperbranched polymer. The hyperbranched polymer is used as seed coating agent, especially as a binder to promote adhesion of the active ingredient(s) to the seeds. The present invention also relates to methods of treating seed with such a composition.
EP 2 308 297 describes an agrochemical composition suitable for seed treatment comprising a herbicide which is mobile in the soil, and an adhesive polymer.US 5,882,713 describes the preparation of a stable and non-separable composition comprised of starch and a water-immiscible material in the absence of external emulsifying or dispersing agents by thoroughly solubilizing an aqueous dispersion of the starch at elevated temperatures and incorporating the water-immiscible material into the non-retrograded starch under conditions of high turbulence. The resulting dispersions form soft gels that can be easily converted to pourable fluids by the application of heat. Upon drying, these dispersions yield solid compositions that are easily redispersed in water to form smooth, stable dispersions. These compositions are useful as thickening agents, suspending agents, waterproof coating materials, adhesives, fat substitutes, and seed coatings. They are receptive to the addition of a variety of other water-immiscible materials, such as volatile and essential oils, food flavorants, medicinals, waxes, agricultural chemicals, and the like.
US 2004/0077498 describes a seed coating composition. The seed coating composition has a first protective polymer film coating, which is non-phytotoxic, maintains oxygen exchange properties, and is hygroscopic. The seed coating composition also has a secondary growth augmentation coating. Also described is a method for coating seeds with a first protective polymer film coating and a secondary growth augmentation coating.
US 5,787,640 describes a fuzzy cotton seed coated to produce a flowable product which is more easily transported and handled and also may be planted by the same planting equipment that is used to plant other seeds, such as corn and beans. The coating process includes first wetting the seed with a solution of a guar derivative such as hydroxypropyl guar. Then the wetted seed is mixed with an excess of a dry powdered guar product, the excess powder screened off, and the coated seed dried.
WO 2008/144744 relates to compositions and methods to durably increase or decrease the wetting properties of a surface. In certain embodiments the methods utilize a polyquaternary ammonium compound to decrease wettability of the surface or a cationic polysaccharide to increase wettability of the surface. US 5 849 320 relates to an insecticidal coating for a seed comprising one or more binders selected from the group consisting of polymers and copolymers of polyvinyl acetate, methyl cellulose, polyvinyl alcohol, vinylidene chloride, acrylic, cellulose, polyvinylpyrrolidone and polysaccharide and an insecticide wherein the binder forms a matrix for the insecticide; methods for producing said coating and the seed treated with the above described coating. Additionally the invention concerns a method of controlling soil-borne insect pests, particularly Diabrotica spp., comprising applying to a seed an insecticidal coating as described above. WO 99/57959 relates to a film coated seed formed by film coating a seed with a starch-based, e.g., polysaccharide, water-dispersible or water-soluble polymer. The polysaccharide polymer is preferably produced by jet cooking the starch. One or more beneficial additives can be included in the film coating, including, for example only, adhesives or binders; plasticizers; colorants or dyes; hydrophobic and/or hydrophilic materials; insecticides, fungicides or herbicides; bacterial inoculants; nutrients; and plant growth regulators. The slurry treatment typically adds about 0.1 to 0.5 % by weight and film coating typically adds about 0.5 to 2 % weight to the seed. The low cost of a starch-based polymer makes film coating cost effective for a wide variety of seeds that have not been previously film coated.

### Summary of Invention

Described herein are seed coating compositions that promote seedling establishment through water retention or water absorption. Also described herein are seed coating compositions that promote seedling establishment as one or more layers of the seed coating composition act as a wetting agent, which wets the adjacent/surrounding area of soil around the seed. Also described herein are seed coating compositions that promote seedling establishment. Further, described herein are coating compositions that promote the retention of active ingredients or agricultural compounds in the soil, such that the agricultural compounds are available or more readily available to plants, vegetation, grasses, trees, and the like. Further, described herein are coating compositions that promote the ability to maintain or sustain active ingredients or agricultural compounds in the soil, such that the active ingredients are available or more readily available to plants, vegetation, grasses, trees, and the like. Currently, one drawback when applying active ingredients or agricultural compounds, such as pesticides, herbicides, and the like, to soil is that these agricultural compounds active ingredients or are lost with water runoff or drainage, and thus not available for grass and plants and the like.

In one embodiment, described herein are coating compositions that promote seedling establishment and plant growth as one or more layers of the coating composition aids as a carrier or retention agent for active ingredients such as fertilizers, pesticides and the like, e.g., improved adhesion of any pesticidal formulation. In one embodiment, the coating composition aids in the ability to maintain the distribution of said pesticides, fertilizers, herbicides, etc. during the application of the treatment.

Also described herein are seed coating compositions that promote seedling establishment as one or more of the layers of the seed coating composition can act as an anti-bacterial agent. Also described herein are seed coating compositions that promote seedling establishment, wherein the seed coating comprises multiple layers, each layer individually capable of providing one or more of the benefits as described herein.

Also described herein are seed coating compositions wherein one or more layers comprise cationic guars as improved film-formation agents that can likewise act as a binding agent, where the cationic guar can be utilized as a film former, a binder or a combination of both. The seed coating compositions described herein are substantially uniform in diameter such that flow of the seeds during application (e.g., spraying) is improved.

The promotion of seedling establishment can minimize yield loss of crops, grasses, shrubs and the like, can maintain and improve the quality of the seeds and can help to avoid the spread of harmful organisms.

In one embodiment, the invention relates to compositions and methods related to seedling establishment, which has an impact on improving yield of crops, as well as agricultural and horticultural plants, shrubs, trees, grasses and the like. In one embodiment, the invention relates to compositions and methods related to prevention of agricultural compounds, such as pesticides, fertilizers, herbicides, and the like, lost to water runoff or drainage (wherein when lost to runoff or drainage, such agricultural compounds are not available for grass and plants and the like).

Applications targeted include agricultural uses to increase the yield of crops or to secure the crop in very hostile areas (non irrigated zones, warm to hot climates, windy areas, scarce precipitation, or a combination of these). Some targeted markets include: agriculture for non-irrigated crops (including but not limited to wheat, cotton, etc); agriculture for irrigated crops (including but not limited to horticulture-based plants); arboriculture, forestry and gardening; golf courses; sport and park turf; seeding additive for plant nurseries; and fruits, among others.

In one aspect, described herein are coating compositions comprising at least one seed and at least one layer coating all or part of the seed, the layer selected from the group consisting of guar, cationic hydroxpropyl guar, polyacrylamide, poly(methacrylic acid), polyvinylpyridine, polyvinylpyrrolidone, poly(acrylic acid), polyacrylate, poly(ethylene glycol), phosphonate-end capped polymers, polyethyleneoxide, poly(vinyl alcohol), polyglycerol, polytetrahydrofuran, polyamide, hydroxypropyl guar, carboxymethyl guar, carboxymethylhydroxypropyl guar, starch, cationic starch, corn starch, wheat starch, rice starch, potato starch, tapioca, waxy maize, sorghum, waxy sarghum, sago, dextrin, chitin, chitosan, alginate compositions, xanthan gum, carageenan gum, gum karaya, gum arabic, pectin, cellulose, hydroxycellulose, hydroxyalkyl cellulose, hydroxyethyl cellulose, carboxymethylhydroxyethyl cellulose, hydroxypropyl cellulose, and a combination of any of the foregoing; wherein the layer comprises a cationic guar; and wherein the seed coating composition is of substantially uniform size of from between 10 micrometers and 4 mm in diameter. In one embodiment, suitable cationic guars include cationically modified polymers such as guar and hydroxypropyl guar and alkyl guar, more typically cationic hydroxylpropyl guar, as well as salts thereof. A typical cationic functional group in these cation guars is trimethylamino(2-hydroxyl)propyl, with chloride as the counter ion.

It is understood, however, that various counter ions can be utilized, including but not limited to halides (e.g., chloride, fluoride, bromide, iodide), sulfate, methylsulfate, and mixtures thereof. In other embodiments, suitable cationic guars include cationically modified alkylated carboxylated polymers such as methyl and ethyl carboxymethyl guar and cationic hydroxypropyl guar, more typically cationic hydroxypropyl guar.

In one aspect, described herein are coating compositions comprising at least one active ingredient selected from the group consisting of herbicides, plant growth regulators, crop dessicants, fungicides, bacteriocides, bacteriostats, insecticides, insect repellants, triazine herbicides, sulfonylurea herbicides, uracils, urea herbicides, acetanilide herbicides, organophosphonate herbicides, glyphosate salts, glyphosate esters, nitrilo oxime fungicides, imidazole fungicides, triazole fungicides, sulfenamide fungicides, dithio-carbamate fungicides, chloronated aromatic, dichloro aniline fungicides, carbamate insecticides, organo thiophosphate insecticides, perchlorinated organic insecticides, methoxychlor, miticides, propynyl sulfite, triazapentadiene miticides, chlorinated aromatic miticides, tetradifan, dinitrophenol miticides, binapacryl, adjuvants, surfactants, fertilizers, and any mixtures thereof; and at least one layer coating all or part of the active ingredient, the layer selected from the group consisting of guar, cationic hydroxypropyl guar, polyacrylamide, poly(methacrylic acid), poly(acrylic acid), polyacrylate, poly(ethylene glycol), phosphonate-end capped polymers, polyethyleneoxide, poly(vinyl alcohol), polyglycerol, polytetrahydrofuran, polyamide, hydroxypropyl guar, carboxymethyl guar, carboxymethylhydroxypropyl guar, starch, cationic starch, corn starch, wheat starch, rice starch, potato starch, tapioca, waxy maize, sorghum, waxy sarghum, sago, dextrin, chitin, chitosan, alginate compositions, xanthan gum, carageenan gum, gum karaya, gum arabic, pectin, cellulose, hydroxycellulose, hydroxyalkyl cellulose, hydroxyethyl cellulose, carboxymethylhydroxyethyl cellulose, hydroxypropyl cellulose, and a combination of any of the foregoing; wherein the layer comprises a cationic guar. In one embodiment, suitable cationic guars include cationically modified polymers such as guar and hydroxypropyl guar and alkyl guar, more typically cationic hydroxylpropyl guar, as well as salts thereof. A typical cationic functional group in these cation guars is trimethylamino(2-hydroxyl)propyl, with chloride as the counter ion. It is understood, however, that various counter ions can be utilized, including but not limited to halides (e.g., chloride, fluoride, bromide, iodide), sulfate, methylsulfate, and mixtures thereof. In other embodiments, suitable cationic guars include cationically modified alkylated carboxylated polymers such as methyl and ethyl carboxymethyl guar and cationic hydroxypropyl guar, more typically cationic hydroxypropyl guar.

In one embodiment, the seed coating composition can also comprise a binder. The binder (or any of the layers) can be molasses, granulated sugar, alginates, karaya gum, jaguar gum, tragacanth gum, polysaccharide gum, mucilage, gelatin, polyvinyl acetates, polyvinyl acetate copolymers, polyvinyl alcohols, polyvinyl alcohol copolymers, celluloses (including ethylcelluloses and methylcelluloses, hydroxypropylcelluloses, hydroxymethyl celluloses, hydroxymethylpropyl-celluloses), polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, carboxymethylcellulose, chitosan, polyethylene oxide, acrylimide polymers and copolymers, polyhydroxyethyl acrylate, methylacrylimide monomers, alginate, ethylcellulose, polychloroprene, syrups or any combination thereof.

In another embodiment, the seed coating composition contains at least one active ingredient. The active ingredient can be one or more herbicides, plant growth regulators, crop dessicants, fungicides, bacteriocides, bacteriostats, insecticides, insect repellants, triazine herbicides, sulfonylurea herbicides, uracils, urea herbicides, acetanilide herbicides, organophosphonate herbicides, glyphosate salts, glyphosate esters, nitrilo oxime fungicides, imidazole fungicides, triazole fungicides, sulfenamide fungicides, dithio-carbamate fungicides, chloronated aromatic, dichloro aniline fungicides, carbamate insecticides, organo thiophosphate insecticides; perchlorinated organic insecticides, methoxychlor, miticides, propynyl sulfite, triazapentadiene miticides, chlorinated aromatic miticides, tetradifan, dinitrophenol miticides, binapacryl, adjuvants, surfactants, fertilizers or any mixture thereof.

In the present invention, the layer comprises a cationic guar. In one embodiment, the cationic guar is cationic hydroxypropyl guar. In another embodiment, the seed coating composition can optionally comprise a filler.

The present invention may also provide a seed coating composition comprising an agglomeration of from between 2 seeds to 100 seeds, and at least one layer selected from the group consisting of a film-forming layer, a layer of a filler, a layer of a binding agent, a layer of a wetting agent, a layer of an anti-bacteria agent, a layer of an active ingredient and any combination thereof. It is understood that the seed coating composition can have more than 1 layer, for example, 2, 3, 4 or 5 or more layers. As an example, the seed coating composition can comprise 3 layers, a first layer comprises a film-forming layer, the second layer comprises fully or in part a binding agent, while the third layer comprises fully or in part a wetting agent. In another example, the seed coating composition can comprise 2 layers, the first layer comprises a film-forming layer, while the second layer comprises an anti-bacteria agent in whole or in part. The number of layers can be chosen to be suitable for a desired application (e.g., dry climate versus tropical). The type of layers described herein can also be varied according to desired sequence, for example, the outermost layer can be a wetting agent while the innermost layer can be an anti-bacteria agent, or, as another example, the outermost layer can be a film-forming layer, while the innermost layer can be a filler layer. It is also understood that some layers can have more than one property; for example, a seed coating composition described herein can have one layer, however, that layer comprises, in part, a binder and, in part, an anti-bacteria agent.

In yet another aspect, described herein are methods for preparing a seed coating composition comprising the steps of: providing at least one seed; providing at least one cationic guar; and contacting the cationic guar to the seed to coat all or a portion of the seed; wherein the seed coating composition is of substantially uniform size of from between 10 micrometers and 4 mm in diameter. The methods, in one embodiment, can further comprise the step of forming an agglomeration of two or more seeds by applying an agglomeration agent to two or more seeds. In some embodiments, the agglomeration contains less than 100 seeds, while in other embodiments, the agglomeration contains less than 25 seeds, and in further embodiments, the agglomeration contains less than 10 seeds.

### Detailed Description of Invention

A seed is coated for various reasons such as to aid is sustaining the seed is adverse conditions, to aid in propagating the seed, to provide a protective layer for the seed, when the seed is too small or non-uniform (from seed to seed) and the shape of sown seeds is desired to be uniform, and the like. In one embodiment, seed coating compositions described herein are prepared such that they are smoother, rounder, more uniform, and optionally, can also be larger and/or heavier than the original seed. Techniques utilized to "sow" the seed can vary from a belt, plate, cup, vacuum or the like. The seed coating composition can be placed individually, with improved spacing and depth control. The seed coating composition described herein can flow better through the seeding mechanism, because their surface is smoother than that of non-coated seed.

Some embodiments comprise methods utilizing seed coating compositions that are easy to synthesize. In one embodiment, seed coating compositions described herein are sprayed/casted onto the soil surface or introduced in the soil volume. There are several ways in which to apply the seed coating compositions described herein to the soil.

The seed coating composition can be applied to or mixed into the soil using various methods. Some methods include but are not limited to: creating a hole in the soil with pressurized water then introducing the seed coating composition into the hole with pressurized air; removing small plugs from the soil (e.g., aeration of golf greens) and introducing the seed coating composition into the hole. Yet other methods also include mixing by applying the seed coating composition on the surface of the target soil area and then mixing or homogenously mixing the target soil area.

Yet another method of applying the seed coating compositions described herein to the target soil area is through casting or spraying. Some techniques may be similar to fertilizer application techniques, which include but are not limited to broadcasting (distribution over a majority or part of a cropped field), placement (application in bands or in pockets near the plants or plant rows) as well as application using low or high volume sprayers.

It is understood that the term "seed" or "seedling" is not limited to a specific or particular type of species or seed. The term "seed" or "seedling" can refer to seed from a single plant species, a mixture of seed from multiple plant species, or a seed blend from various strains within a plant species. In one embodiment, crop seeds include but are not limited to rice, corn, wheat, barley, oats, soybean, cotton, sunflower, alfalfa, sorghum, rapeseed, sugarbeet, tomato, bean, carrot, tobacco or flower seeds.

### Polymer coatings

In one embodiment, the at least one layer of the seed coating composition can comprise (in whole or partially) synthetic polymers or natural polymers. Such polymers are not particularly limited and can be homopolymers, as well as random or block or any other types of copolymers made from any polymerizable monomer.

In one embodiment, the polymerizable monomers are typically water-soluble chargeable monomers having carboxylic groups, sulfonate groups, phosphonate groups and the like. In one embodiment, the polymerizable monomers having one or more carboxylic groups include but are not limited to acrylic acid, methacrylic acid, crotonic acid, sorbic acid, maleic acid, itaconic acid, cinnamic acid, its salt or the like, or an anhydride thereof (maleic anhydride or the like). The counterion of such polymerizable monomer salts include any suitable counterion including but not limited to alkyl ammonium, halides, sodium, calcium, potassium, barium, lithium, magnesium, ammonium cation, and the like.

The polymerizable monomers include also neutral, typically water-soluble monomers or monomers, such as radically polymerizable acrylates, methacrylates, acrylamides, methacrylamides, vinyl alcohol, allyl alcohols, vinyl acetates, betaine-containing vinyl monomers (including but not limited to carboxyl betaines and sulfobetaines), and other ethylenically unsaturated monomers. The polymers can also include component polymers from other polymerization techniques such as condensation, anionic polymerization, cationic polymerization, ring opening polymerization, coordination polymerization, metathesis polymerization, etc., as exemplified by poly(alkylene oxides) (including but not limited to poly(ethylene glycol), poly(propylene glycol), and polytetrahydrofuran), polyglycerol, polyamine, polyester, polyamide, and/or copolymers of any of the foregoing.

In one exemplary embodiment, the synthetic polymers include but are not limited to polyacrylamide, poly(methacrylic acid), poly(acrylic acid), polyacrylate, poly(ethylene glycol), phosphonate-end capped polymers, polyethyleneoxide, poly(vinyl alcohol), polyglycerol, polytetrahydrofuran and polyamide. The phosphonate end-capped polymers, for example, can be any of the herein described polymers or copolymers containing a phosphonate or phosphate terminating end-group or end-groups.

Examples of suitable polysaccharides include but are not limited to galactomannan polymers, guar, starch, cationic starch, dextrins, chitin/chitosan, alginate compositions, cassia gum, tara gum, xanthan gum, locust beam gum, carrageenan gum, gum karaya, gum arabic, succinoglycan, pectin, crystalline polysaccharides, branched polysaccharide, cellulose, as well as ionic and/or nonionic derivatives thereof.

Examples of suitable cellulose include but are not limited to hydroxycelluloses, hydroxyalkyl cellulose, including hydroxyethyl cellulose, carboxymethylhydroxyethyl cellulose, hydroxypropyl cellulose, carboxymethylcellulose and other modified celluloses.

Examples of suitable starch sources include but are not limited to corn starch, wheat starch, rice starch, potato starch, tapioca, waxy maize, sorghum, waxy sorghum, sago and modified starches. Examples of modified starches include cationic, dextrinated, hydrolysed, oxidized, crosslinked, alkylated, hydroxyalkylated, acetylated, fractionated (e.g. amylose and amylopectin), and physically modified starches, among others.

### Guar

In the present invention, the layer comprises a cationic guar.
Examples of suitable guar include but are not limited to guar, hydroxypropyl guar, carboxymethyl guar, carboxymethylhydroxypropyl guar, and other modified guar. It is understood that the term "guar" and "guar gum" is interchangeable as used herein. In one embodiment, the guar includes but is not limited to carboxymethyl guar, hydroxyethyl guar, hydroxypropyl guar, carboxymethylhydroxypropyl guar, cationic guar, hydrophobically modified guar, hydrophobically modified carboxymethyl guar, hydrophobically modified hydroxyethyl guar, hydrophobically modified hydroxypropyl guar, cationic hydrophobically modified hydroxypropyl guar, hydrophobically modified carboxymethylhydroxypropyl guar, hydrophobically modified cationic guar, or any combination thereof.

In one embodiment, the polymer comprising a layer has a weight average molecular weight of between about 5,000 daltons and 500,000 daltons. In another embodiment, the polymer has a weight average molecular weight of between about 200,000 daltons and 1,000,000 daltons. In another embodiment, the soil additive is a polymer having a weight average molecular weight of up to about 5,000,000 daltons. In another embodiment, the soil additive is a polymer having a weight average molecular weight of up to about 25,000,000 daltons. In a further embodiment, the soil additive is a polymer having a weight average molecular weight of up to about 50,000,000 daltons.

Typically, when a layer is acting as a wetting agent, the polymer utilized is generally associated with lower (weight average) molecular weight, typically less than about 700,000 dalton, or in another embodiment less than 500,000 daltons, or less than about 100,000 daltons. Typically, when a layer is acting as a water retention agent, the polymer utilized is generally associated with a higher (weight average) molecular weight, which in one embodiment is greater than about 500,000 daltons, in another embodiment greater than about 800,000 daltons, and in yet another embodiment greater than about 1,000,000 daltons, and in a further embodiment greater than about 2,000,000 daltons.

The polymers may also be cross-linked or non-crosslinked, or to some degree a combination of both. The crosslinking agents utilized can include but are not limited to copper compounds, magnesium compounds, borax, glyoxal, zirconium compounds, titanium compounds (for example, titanium IV compounds such as titanium lactate, titanium malate, titanium citrate, titanium ammonium lactate, polyhydroxy complexes of titanium, titanium triethanolamine, and titanium acetylacetonate), calcium compounds, aluminum compounds (such as, for example, aluminum lactate or aluminum citrate), p-benzoquinone, dicarboxylic acids and their salts, phosphite compounds and phosphate compounds. In another embodiment, the crosslinking agent is a chemical compound containing a polyvalent ion such as, but not necessarily limited to, boron or a metal such as chromium, iron, aluminum, titanium, antimony and zirconium, or mixtures of polyvalent ions.

In some embodiments, one or more layers described herein can act as a "film-coating", typically, a guar comprising layer. A thin film can smooth the surface of the seed coating composition for better flow ability. The film-coating also influences water uptake and the adherence of additional ingredients, such as for example chemical fungicide treatments. In some embodiments, film coating only increases the raw weight of the seed or agglomerates 1% to 5%, far less than traditional powder coatings. In some embodiments, up to 10%, in other embodiment up to 25%, up to , 15%, 40%, 50%

In another embodiment, a film-coating layer, which can comprise guar such as a cationic guar, can prevent the moisture from leaving the seed. Such a film-coating layer can extend the shelf life of the seed. In one embodiment, the film-coating layer can extend the shelf-life of a seed by at least 2 months, in other embodiments, by at least 3 months, in yet other embodiments, by at least 4 months, in further embodiments, by at least 6 months, in other embodiments, by at least 8 months, in yet other embodiments, by at least 12 months, and in other embodiments, by at least 18 months. Every seed has a shelf-life, depending on individual characteristics such as size and other seed characteristics, which coincides with a seed's dormant state. (Normally, in dormant state, but there has to be minimum water content to sustain the seed in such a state.) For example, grass seeds have a shelf-life of about 1 year before the seeds are generally no longer viable. In other words, the seed coating compositions described herein can promote the survival rate of the seed.

In yet another embodiment, the film-coating layer can act as barrier against water loss from the seed. This, in turn, can promote the survival rate of the seed.

In another embodiment, it is believed the film-coating layer can act as an anti-bacterial agent, which in particular is a cationic guar. Such a cationic guar typically takes a longer time to degrade than other layers or coating layers. In addition, once such a cationic guar film-coating layer degrades, in its degraded state, the cationic guar is able to kill bacteria or inhibit the growth of bacteria.

### Binder

The seed coating composition can also comprise a binder as one of the layers, the bonder sometimes referred to as an adhesive. In one embodiment, the binder can include but is not limited to molasses, granulated sugar, alginates, karaya gum, guar gum, tragacanth gum, polysaccharide gum, mucilage or any combination of the foregoing. In another embodiment, the binder is chosen from, but is not limited to, gelatin, polyvinyl acetates, polyvinyl acetate copolymers, polyvinyl alcohols, polyvinyl alcohol copolymers, celluloses (including ethylcelluloses and methylcelluloses, hydroxypropylcelluloses, hydroxymethyl celluloses, hydroxymethylpropyl-celluloses), polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, polyvinylacrylates, zeins, carboxymethylcellulose, chitosan, polyethylene oxide, acrylimide polymers and copolymers, polyhydroxyethyl acrylate, methylacrylimide monomers, alginate, ethylcellulose, polychloroprene, syrups or any combination of the foregoing.

### Active Ingredients

Compounds suitable as active ingredients, which in some embodiments form all or part of at least one layer of the seed coating composition, include but are not limited to herbicides, plant growth regulators, crop dessicants, fungicides, bacteriocides, bacteriostats, insecticides, and insect repellants. Suitable pesticides include, for example, triazine herbicides; sulfonylurea herbicides; uracils; urea herbicides; acetanilide herbicides; and organophosphonate herbicides such as glyphosate salts and esters. Suitable fungicides include, for example, nitrilo oxime fungicides; imidazole fungicides; triazole fungicides; sulfenamide fungicides; dithio-carbamate fungicides; chloronated aromatic; and dichloro aniline fungicides. Suitable insecticides, include, for example, carbamate insecticides; organo thiophosphate insecticides; and perchlorinated organic insecticides such as methoxychlor. Suitable miticides include, for example, propynyl sulfite; triazapentadiene miticides; chlorinated aromatic miticides such as tetradifan; and dinitrophenol miticides such as binapacryl. Other active ingredients can comprise adjuvants, surfactants, fertilizers.

In the present invention, the coating composition comprises at least one layer coating all or part of one or more active ingredients, described herein, the layer selected from the group consisting of guar, polyacrylamide, poly(methacrylic acid), polyvinylpyridine, polyvinylpyrrolidone, poly(acrylic acid), polyacrylate, poly(ethylene glycol), phosphonate-end capped polymers, polyethyleneoxide, poly(vinyl alcohol), polyglycerol, polytetrahydrofuran, polyamide, hydroxypropyl guar, carboxymethyl guar, carboxymethylhydroxypropyl guar, starch, cationic starch, corn starch, wheat starch, rice starch, potato starch, tapioca, waxy maize, sorghum, waxy sarghum, sago, dextrin, chitin, chitosan, alginate compositions, xanthan gum, carageenan gum, gum karaya, gum arabic, pectin, cellulose, hydroxycellulose, hydroxyalkyl cellulose, hydroxyethyl cellulose, carboxymethylhydroxyethyl cellulose, hydroxypropyl cellulose, and a combination of any of the foregoing; wherein the layer comprises a cationic guar. In one embodiment, suitable cationic guars include cationically modified polymers such as guar and hydroxypropyl guar and alkyl guar, more typically cationic hydroxylpropyl guar, as well as salts thereof. A typical cationic functional group in these cation guars is trimethylamino(2-hydroxyl)propyl, with chloride as the counter ion. It is understood, however, that various counter ions can be utilized, including but not limited to halides (e.g., chloride, fluoride, bromide, iodide), sulfate, methylsulfate, and mixtures thereof. In other embodiments, suitable cationic guars include cationically modified alkylated carboxylated polymers such as methyl and ethyl carboxymethyl guar and cationic hydroxypropyl guar, more typically cationic hydroxypropyl guar.

### Filler

The seed coating composition can also include at least one filler as all or part of a layer. In one embodiment, the filler is selected from nonlimiting examples such as wood flours, clays, activated carbon, carbohydrates, sugars, dextrins, maltodextrins, diatomaceous earth, cereal flours, wheat flour, oat flour, barley flour, fine-grain inorganic solids, calcium carbonate, calcium bentonite, kaolin, china clay, talc, perlite, mica, vermiculite, silicas, quartz powder, montmorillonite or mixtures thereof.

### Nutrients

The seed coating composition can also comprise a nutrient such as a micronutrient or macronutrient. The nutrient can comprise one or more layers of the seed coating composition, as well as comprise all or part of a layer. The nutrient can also be included with the grouping of seeds as part of the binder or adhesive. "Nutrient" as used herein can refer to an additive or substance utilized by plants, grasses, shrubs for plant, grass, and shrub growth, respectively. Macronutrients can be utilized in larger amounts by plants, grasses, etc. in proportionally larger amounts relative to micronutrients. Nutrients include but are not limited to manganese, boron, copper, iron, chlorine, molybdenum, and zinc, potassium, nitrogen, calcium, magnesium phosphorus and sulfur, among others. Compositions of the present invention can include various combinations and relative amounts of individual macronutrients.

### Method of creating the polymers

There are several production processes for making the seed coating that forms part of the seed coating composition. In one embodiment, the seed coating is a suitable synthetic polymer wherein methods for making such synthetic polymers are documented in U.S. Patent No. 5,202,400. Polymers can be made from radical polymerization, condensation, anionic polymerization, cationic polymerization, ring open polymerization, coordination polymerization, and metathesis polymerization, and the like. Examples of suitable radical polymerization processes include but are not limited to solution polymerization process, emulsion polymerization process, suspension polymerization process, reverse-phase suspension polymerization process, thin film polymerization process, and spray polymerization process, and the like.

Methods for making suitable natural polymers are also generally known in the art. The cross-linking processes of polysaccharides are described in US Publication No. 20030027787 and US Patent No. 5,532,350.

### Seed coating composition

The seed coating composition in the present invention comprises at least one seed and at least one layer that coats all or part of the seed. In the present invention, the layer is selected from the group consisting of guar, cationic hydroypropylguar, polyacrylamide, poly(methacrylic acid), poly(acrylic acid), polyacrylate, poly(ethylene glycol), phosphonate-end capped polymers, polyethyleneoxide, poly(vinyl alcohol), polyglycerol, polytetrahydrofuran, polyamide, hydroxypropyl guar, carboxymethyl guar, carboxymethyl hydroxypropyl guar, starch, cationic starch, corn starch, wheat starch, rice starch, potato starch, tapioca, waxy maize, sorghum, waxy sarghum, sago, dextrin, chitin, chitosan, alginate compositions, xanthan gum, carageenan gum, gum karaya, gum arabic, pectin, cellulose, hydroxycellulose, hydroxyalkyl cellulose, hydroxyethyl cellulose, carboxymethylhydroxyethyl cellulose, hydroxypropyl cellulose, and a combination of any of the foregoing; wherein the layer comprises a cationic guar; and wherein the seed coating composition is of substantially uniform size of from between 10 micrometers and 4 mm in diameter. As non-limiting examples, the layer can comprise a 90 wt% cationic guar and 10 wt% starch mixture.

More typically, the layer comprises guar. It has been surprisingly found that guars are excellent film formers and can be used as a binder to coat the seed or seeds. It has also been surprisingly found that guars are good wetting agents as they can hydrophilize or attract water to the area of soil surrounding the seed.

In some embodiments, the layer can act as a carrier coating. Fungicides and beneficial microbials that protect the seed and emerging seedling are carried in the carrier coating. For example, alfalfa seed coating with incorporated rhizobacteria is used to inoculate the field with beneficial microbial.

### Agglomeration

In one embodiment, a seed is typically coated when the non-coated or raw seed is too small, light or variable in shape or size to be sown accurately with equipment currently used. Thus, it is desirable for farmers, growers, etc. to be able to precisely sow a crop. Such precision sowing is desirable when growers need strict control of spacing or depth of placement. This is also important for crops that are direct sown and then thinned back to the desired population, i.e., field thinning. Incidence of "skips" or "doubles" can be reduced and seedlings can be more accurately spaced (for example, with a deviation of less than 0.5 inches on center in the row as opposed to traditional techniques with deviations of greater than several inches). In some instances, it is desirable to agglomerate two or more seeds to create a uniform size for improved or efficient sowing.

The invention may include agglomerates of seed. The agglomerate or grouping of seed, in one embodiment, is a grouping of 2 or more individual seeds together. In another embodiment, the agglomerate is a grouping of more than 5 individual seeds together. In a further embodiment, the agglomerate is a grouping of more than 10 individual seeds together. In yet another embodiment, the agglomerate is a grouping of more than 25 individual seeds together. In yet a further embodiment, the agglomerate is a grouping of more than 50 individual seeds together. In another embodiment, the agglomerate is a grouping of more than 100 individual seeds together.

The agglomeration of seed can aid in the application of the seed coating composition because the seed coating composition, when using an agglomeration of seed, can be shaped or formed to be consistent in shape or form. For example, the agglomeration can be formed as spherical or substantially spherical, thus allowing the seed coating composition to be likewise substantially spherical. This can allow for improved or more consistent casting or spraying, can minimize the occurrence of blockage or clogging of the nozzles, hoses, etc. due to uneven particle size distribution. Typically, a binder or adhesive is utilized to bunch (i.g., agglomerize) the grouping of seeds together.

The agglomeration can also aid in seed or seedling establishment as a layer of the wetting agent (or other layer than affects the soil) can be concentrated to a local area of soil, thus, increasing its chance of wetting the soil surrounding the seed(s). the agglomeration can also promote survival by allowing the seeds, when germinating into seedlings, to generate sufficient force to penetrate hydrophobic areas or soil such as, for example, a hydrophobic (i.e., encrusted) soil surface

In one embodiment, the seed coating composition comprising an agglomeration of seeds of from between 2 seeds to 100 seeds, typically between 2 to 50 seeds, typically between 2 to 25 seeds; and at least one layer selected from the group consisting a layer of a filler, a layer of a binding agent, a layer of a wetting agent, a layer of an anti-bacteria agent, a layer of an active ingredient and any combination thereof.

In another embodiment, a method for preparing a seed coating composition comprises the steps of: providing at least one seed; providing at least one cationic guar; and contacting the cationic guar to the seed to coat all or a portion of the seed; wherein the seed coating composition is of substantially uniform size of from between 10 micrometers and 4 mm in diameter.

In the present invention, the seed coating composition is of substantially uniform size of from between 10 micrometers and 4 mm in diameter. In another embodiment, the seed coating composition is of substantially uniform size of from between 25 micrometers and 2 mm in diameter. In a further, the seed coating composition is of substantially uniform size of from between 500 micrometers and 2 mm in diameter.

### Coating techniques

Suitable coating techniques may be utilized to coat the seeds or agglomeration of seed of the seed coating compositions described herein. Equipment utilized to for coating can include but are not limited to drum coaters, rotary coaters, tumbling drums, fluidized beds and spouted beds, but any suitable equipment or technique may be employed. The seeds may be coated via a batch or continuous coating process.

The seeds can be separated prior to coating which, in one embodiment, utilizes mechanical means such as a sieve. The separated seeds can then be introduced into a coating machine having a seed reservoir. In one embodiment, the seeds in the mixing bowl are combined with one or more of the coatings described herein and adhered with a binder or adhesive.

In one embodiment of the process, one or more layers as described herein can be added to coat the seed or agglomeration. Outer layers can be introduced sequentially to the rotating drum.

In another embodiment, agglomerators or agglomerator devices may also be utilized. Coating is performed within a rotary coater by placing seeds within a rotating chamber, which pushes the seeds against the inside wall of the chamber. Centrifugal forces and mixing bars placed inside the coater allow the seed to rotate and mix with a coating layer. Binder or other coating materials can be pumped into the proximate center of the coater onto an atomizer disk that rotates along with the coating chamber. Upon hitting the atomizer disk, liquid adhesive is then directed outward in small drops onto the seed.

In one embodiment, seed coating techniques include, for example, seed in a rotating pan or drum. Seed is then mist with water or other liquid and then gradually a fine inert powder, e.g., Diatomaceous earth, is added to the coating pan. Each misted seed becomes the center of a mass of powder, layers, or coatings that gradually increases in size. The mass is then rounded and smoothed by the tumbling action in the pan, similar to pebbles on the beach. The coating layers are compacted by compression from the weight of material in the pan. Binders often are incorporated near the end of the coating process to harden the outer layer of the mass. Binders can also reduce the amount of dust produced by the finished product in handling, shipping and sowing. Screening techniques, such as frequent hand screening, are often times utilized to eliminate blanks or doubles, and to ensure uniform size. For example, tolerance for seed coating compositions desribed herein can be +/-1/64th inch (0.4mm), which is the US seed trade standard for sizing, established long before coatings were introduced. For example, coated lettuce seed is sown most frequently with a belt planter through a 13/64 inch diameter round holes in the belt. This hole size requires that the seed coating compositions comprising lettuce seeds can be sized over a 7.5/64 inch screen and through an 8.5/64 inch screen.

In yet another embodiment, the seed coating compositions and methods described herein comprises "in situ coating". In situ coating means, in one embodiment, where a raw or non-coated seed is implanted in a hole, cavity or hollowed area in the ground and immediately or soon thereafter a coating composition is sprayed or applied directly into the hole, cavity or hollowed area to surround or partially surround the seed. Typically, the application of the seed as well as application of the coating composition are performed mechanically, but is understood that either or both of the referenced applications can be performed manually as well.

## Claims

1. A seed coating composition comprising:
at least one seed; and
at least one layer coating all or part of the seed, the layer selected from the group consisting of guar, cationic hydroxypropyl guar, polyacrylamide, poly(methacrylic acid), poly(acrylic acid), polyacrylate, poly(ethylene glycol), phosphonate-end capped polymers, polyethyleneoxide, poly(vinyl alcohol), polyglycerol, polytetrahydrofuran, polyamide, hydroxypropyl guar, carboxymethyl guar, carboxymethylhydroxypropyl guar, starch, cationic starch, corn starch, wheat starch, rice starch, potato starch, tapioca, waxy maize, sorghum, waxy sarghum, sago, dextrin, chitin, chitosan, alginate compositions, xanthan gum, carageenan gum, gum karaya, gum arabic, pectin, cellulose, hydroxycellulose, hydroxyalkyl cellulose, hydroxyethyl cellulose, carboxymethylhydroxyethyl cellulose, hydroxypropyl cellulose, and a combination of any of the foregoing;
wherein the layer comprises a cationic guar; and
wherein the seed coating composition is of substantially uniform size of from between 10 micrometers and 4 mm in diameter.

2. The seed coating composition of claim 1 further comprising a binder.

3. The seed coating composition of claim 2 wherein the binder is selected from the group consisting of molasses, granulated sugar, alginates, karaya gum, jaguar gum, tragacanth gum, polysaccharide gum, mucilage and any combination thereof.

4. The seed coating composition of claim 2 wherein the binder is selected from the group consisting of gelatin, polyvinyl acetates, polyvinyl acetate copolymers, polyvinyl alcohols, polyvinyl alcohol copolymers, celluloses (including ethylcelluloses and methylcelluloses, hydroxypropylcelluloses, hydroxymethyl celluloses, hydroxymethylpropyl-celluloses), polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, cationic starch, polyvinylacrylates, zeins, carboxymethylcellulose, chitosan, polyethylene oxide, acrylimide polymers and copolymers, polyhydroxyethyl acrylate, methylacrylimide monomers, alginate, ethylcellulose, polychloroprene, syrups and any combination thereof.

5. The seed coating composition of claim 1 further comprising at least one active ingredient.

6. The seed coating composition of claim 5, wherein the at least one active ingredient is selected from the group consisting of herbicides, plant growth regulators, crop dessicants, fungicides, bacteriocides, bacteriostats, insecticides, insect repellants, triazine herbicides, sulfonylurea herbicides, uracils, urea herbicides, acetanilide herbicides, organophosphonate herbicides, glyphosate salts, glyphosate esters, nitrilo oxime fungicides, imidazole fungicides, triazole fungicides, sulfenamide fungicides, dithio-carbamate fungicides, chloronated aromatic, dichloro aniline fungicides, carbamate insecticides, organo thiophosphate insecticides; perchlorinated organic insecticides, methoxychlor, miticides, propynyl sulfite, triazapentadiene miticides, chlorinated aromatic miticides, tetradifan, dinitrophenol miticides, binapacryl, adjuvants, surfactants, fertilizers and any mixtures thereof.

7. The seed coating composition of claim 1 wherein the cationic guar is cationic hydroxypropyl guar.

8. The seed coating composition of claim 1 further comprising at least one filler.

9. The seed coating composition of claim 8, wherein the at least one filler is selected from the group consisting of wood flours, clays, activated carbon, carbohydrates, sugars, dextrins, maltodextrins, diatomaceous earth, cereal flours, wheat flour, oat flour, barley flour, fine-grain inorganic solids, calcium carbonate, calcium bentonite, kaolin, china clay, talc, perlite, mica, vermiculite, silicas, quartz powder, montmorillonite and mixtures thereof.

10. The seed coating composition of claim 1 wherein the at least one seed is an agglomeration of two or more seeds.

11. A method for preparing a seed coating composition comprising the steps of:
providing at least one seed;
providing at least one cationic guar; and
contacting the cationic guar to the seed to coat all or a portion of the seed;
wherein the seed coating composition is of substantially uniform size of from between 10 micrometers and 4 mm in diameter.

12. The method of claim 11 further comprising the step of forming an agglomeration of two or more seeds by applying an agglomeration agent to two or more seeds.

13. The method of claim 12 wherein the agglomeration contains less than 100 seeds, preferably less than 25 seeds, and most preferably less than 10 seeds.

14. A coating composition comprising:
at least one active ingredient selected from the group consisting of herbicides, plant growth regulators, crop dessicants, fungicides, bacteriocides, bacteriostats, insecticides, insect repellants, triazine herbicides, sulfonylurea herbicides, uracils, urea herbicides, acetanilide herbicides, organophosphonate herbicides, glyphosate salts, glyphosate esters, nitrilo oxime fungicides, imidazole fungicides, triazole fungicides, sulfenamide fungicides, dithio-carbamate fungicides, chloronated aromatic, dichloro aniline fungicides, carbamate insecticides, organo thiophosphate insecticides, perchlorinated organic insecticides, methoxychlor, miticides, propynyl sulfite, triazapentadiene miticides, chlorinated aromatic miticides, tetradifan, dinitrophenol miticides, binapacryl, adjuvants, surfactants, fertilizers, and any mixtures thereof; and
at least one layer coating all or part of the active ingredient, the layer selected from the group consisting of guar, cationic hydroxypropyl guar, polyacrylamide, poly(methacrylic acid), poly(acrylic acid), polyacrylate, poly(ethylene glycol), phosphonate-end capped poly mers, polyethyleneoxide, poly(vinyl alcohol), polyglycerol, polytetrahydrofuran, polyamide, hydroxypropyl guar, carboxymethyl guar, carboxymethylhydroxypropyl guar, starch, cationic starch, corn starch, wheat starch, rice starch, potato starch, tapioca, waxy maize, sorghum, waxy sarghum, sago, dextrin, chitin, chitosan, alginate compositions, xanthan gum, carageenan gum, gum karaya, gum arabic, pectin, cellulose, hydroxycellulose, hydroxyalkyl cellulose, hydroxyethyl cellulose, carboxymethylhydroxyethyl cellulose, hydroxypropyl cellulose, and any combination of the foregoing;
wherein the layer comprises a cationic guar.

## Patentansprüche

1. Samenbeschichtungszusammensetzung, umfassend:
zumindest einen Samen; und
zumindest eine Schicht, die den gesamten Samen oder einen Teil davon beschichtet, wobei die Schicht ausgewählt ist aus der Gruppe bestehend aus Guar, kationischem Hydroxypropylguar, Polyacrylamid, Poly(methacrylsäure), Poly(acrylsäure), Polyacrylat, Poly(ethylenglykol), phosphonatendverkappten Polymeren, Polyethylenoxid, Poly(vinylalkohol), Polyglycerin, Polytetrahydrofuran, Polyamid, Hydroxypropylguar, Carboxymethylguar, Carboxymethylhydroxypropylguar, Stärke, kationischer Stärke, Maisstärke, Weizenstärke, Reisstärke, Kartoffelstärke, Tapioka, wachsartigem Mais, Sorghum, wachsartigem Sarghum, Sago, Dextrin, Chitin, Chitosan, Alginatzusammensetzungen, Xanthangummi, Carrageengummi, Karayagummi, Gummi arabicum, Pektin, Cellulose, Hydroxycellulose, Hydroxyalkylcellulose, Hydroxyethylcellulose, Carboxymethylhydroxyethylcellulose, Hydroxypropylcellulose und einer Kombination aus einem beliebigen des Vorstehenden;
wobei die Schicht ein kationisches Guar umfasst; und
wobei die Samenbeschichtungszusammensetzung eine im Wesentlichen einheitliche Größe von zwischen 10 Mikrometern und 4 mm Durchmesser aufweist.

2. Samenbeschichtungszusammensetzung nach Anspruch 1, ferner umfassend ein Bindemittel.

3. Samenbeschichtungszusammensetzung nach Anspruch 2, wobei das Bindemittel ausgewählt ist aus der Gruppe bestehend aus Melassen, Kristallzucker, Alginaten, Karayagummi, Jaguargummi, Tragantgummi, Polysaccharidgummi, Schleim und einer beliebigen Kombination davon.

4. Samenbeschichtungszusammensetzung nach Anspruch 2, wobei das Bindemittel ausgewählt ist aus der Gruppe bestehend aus Gelatine, Polyvinylacetaten, Polyvinylacetat-Copolymeren, Polyvinylalkoholen, Polyvinylalkohol-Copolymeren, Cellulosen (einschließlich Ethylcellulosen und Methylcellulosen, Hydroxypropylcellulosen, Hydroxymethylcellulosen, Hydroxymethylpropylcellulosen), Polyvinylpyrolidonen, Dextrinen, Maltodextrinen, Polysacchariden, Fetten, Ölen, Proteinen, Gummiarabicum, Schellack, Vinylidenchlorid, Vinylidenchlorid-Copolymeren, Calciumlignosulfonaten, Acrylcopolymeren, Stärken, kationischer Stärke, Polyvinylacrylaten, Zeinen, Carboxymethylcellulose, Chitosan, Polyethylenoxid, Acrylimid-Polymeren und -Copolymeren, Polyhydroxyethylacrylat, Methylacrylimid-Monomeren, Alginat, Ethylcellulose, Polychloropren, Sirupen und einer beliebigen Kombination davon.

5. Samenbeschichtungszusammensetzung nach Anspruch 1, ferner umfassend zumindest einen Wirkstoff.

6. Samenbeschichtungszusammensetzung nach Anspruch 5, wobei der zumindest eine Wirkstoff ausgewählt ist aus der Gruppe bestehend aus Herbiziden, Pflanzenwachstumsregulatoren, Pflanzentrocknungsmitteln, Fungiziden, Bakterioziden, Bakteriostatika, Insektiziden, Insektenabwehrmitteln, Triazin-Herbiziden, SulfonylharnstoffHerbiziden, Uracilen, Harnstoff-Herbiziden, Acetanilid-Herbiziden, Organophosphonat-Herbiziden, Glyphosatsalzen, Glyphosatestern, Nitrilooxim-Fungiziden, Imidazol-Fungiziden, Triazol-Fungiziden, Sulfenamid-Fungiziden, Dithiocarbamat-Fungiziden, chlorierten Aromaten, Dichloranilin-Fungiziden, Carbamat-Insektiziden, Organo-Thio-Phosphat-Insektiziden; perchlorierten organischen Insektiziden, Methoxychlor, Mitiziden, Propinylsulfit, Triazapentadien-Mitiziden, chlorierten aromatischen Mitiziden, Tetradifan, Dinitrophenol-Mitiziden, Binapacryl, Hilfsstoffen, Tensiden, Düngemitteln und beliebigen Mischungen davon.

7. Samenbeschichtungszusammensetzung nach Anspruch 1, wobei das kationische Guar kationisches Hydroxypropylguar ist.

8. Samenbeschichtungszusammensetzung nach Anspruch 1, ferner umfassend zumindest einen Füllstoff.

9. Samenbeschichtungszusammensetzung nach Anspruch 8, wobei der zumindest eine Füllstoff ausgewählt ist aus der Gruppe bestehend aus Holzmehlen, Tonen, Aktivkohle, Kohlenhydraten, Zuckern, Dextrinen, Maltodextrinen, Diatomeenerde, Getreidemehlen, Weizenmehl, Hafermehl, Gerstenmehl, feinkörnigen anorganischen Feststoffen, Calciumcarbonat, Calciumbentonit, Kaolin, Porzellanerde, Talkum, Perlit, Glimmer, Vermiculit, Kieselsäuren, Quarzmehl, Montmorillonit und Mischungen davon.

10. Samenbeschichtungszusammensetzung nach Anspruch 1, wobei der zumindest eine Samen eine Agglomeration von zwei oder mehr Samen ist.

11. Verfahren zum Herstellen einer Samenbeschichtungszusammensetzung, umfassend die folgenden Schritte:
Bereitstellen von zumindest einem Samen;
Bereitstellen von zumindest einem kationischen Guar; und
Kontaktieren des kationischen Guars mit dem Samen, um den gesamten Samen oder einen Teil davon zu beschichten;
wobei die Samenbeschichtungszusammensetzung eine im Wesentlichen einheitliche Größe von zwischen 10 Mikrometern und 4 mm Durchmesser aufweist.

12. Verfahren nach Anspruch 11, ferner umfassend den Schritt des Bildens einer Agglomeration von zwei oder mehr Samen durch Aufbringen eines Agglomerationsmittels auf zwei oder mehr Samen.

13. Verfahren nach Anspruch 12, wobei die Agglomeration weniger als 100 Samen enthält, bevorzugt weniger als 25 Samen und am meisten bevorzugt weniger als 10 Samen.

14. Beschichtungszusammensetzung, umfassend:
zumindest einen Wirkstoff ausgewählt aus der Gruppe bestehend aus Herbiziden, Pflanzenwachstumsregulatoren, Pflanzentrocknungsmitteln, Fungiziden, Bakterioziden, Bakteriostatika, Insektiziden, Insektenabwehrmitteln, Triazin-Herbiziden, SulfonylharnstoffHerbiziden, Uracilen, Harnstoff-Herbiziden, Acetanilid-Herbiziden, Organophosphonat-Herbiziden, Glyphosatsalzen, Glyphosatestern, Nitrilooxim-Fungiziden, Imidazol-Fungiziden, Triazol-Fungiziden, Sulfenamid-Fungiziden, Dithiocarbamat-Fungiziden, chlorierten Aromaten, Dichloranilin-Fungiziden, Carbamat-Insektiziden, Organo-Thio-Phosphat-Insektiziden, perchlorierten organischen Insektiziden, Methoxychlor, Mitiziden, Propylsulfit, Triazapentadien-Mitiziden, chlorierten aromatischen Mitiziden, Tetradifan, Dinitrophenol-Mitiziden, Binapacryl, Adjuvantien, Tensiden, Düngemitteln und beliebigen Mischungen davon; und
zumindest eine Schicht, die den gesamten oder einen Teil des Wirkstoffs bedeckt, wobei die Schicht ausgewählt ist aus der Gruppe bestehend aus Guar, kationischem Hydroxypropylguar, Polyacrylamid, Poly(methacrylsäure), Poly(acrylsäure), Polyacrylat, Poly(ethylenglykol), phosphonatendverkappten Polymeren, Polyethylenoxid, Poly(vinylalkohol), Polyglycerin, Polytetrahydrofuran, Polyamid, Hydroxypropylguar, Carboxymethylguar, Carboxymethylhydroxypropylguar, Stärke, kationischer Stärke, Maisstärke, Weizenstärke, Reisstärke, Kartoffelstärke, Tapioka, wachsartigem Mais, Sorghum, wachsartigem Sarghum, Sago, Dextrin, Chitin, Chitosan, Alginatzusammensetzungen, Xanthangummi, Carrageengummi, Karayagummi, Gummiarabikum, Pektin, Cellulose, Hydroxycellulose, Hydroxyalkylcellulose, Hydroxyethylcellulose, Carboxymethylhydroxyethylcellulose, Hydroxypropylcellulose und einer beliebigen Kombination des Vorstehenden;
wobei die Schicht ein kationisches Guar umfasst.

## Revendications

1. Composition d'enrobage de semences comprenant :
au moins une semence ; et
au moins une couche enrobant tout ou partie de la graine, la couche étant choisie dans le groupe constitué par le guar, le guar hydroxypropyle cationique, le polyacrylamide, l'acide polyméthacrylique, l'acide polyacrylique, le polyacrylate, le polyéthylène glycol, les polymères à extrémité bloquée par un groupe phosphonate, l'oxyde de polyéthylène, l'alcool polyvinylique, le polyglycérol, le polytétrahydrofurane, le polyamide, le guar hydroxypropyle, le guar carboxyméthyle, le guar carboxyméthylhydroxypropyle, l'amidon, l'amidon cationique, l'amidon de maïs, l'amidon de blé, l'amidon de riz, la fécule de pomme de terre, le tapioca, le maïs cireux, le sorgho, le sorghum cireux, le sagou, la dextrine, la chitine, le chitosane, les compositions d'alginate, la gomme de xanthane, la gomme de carraghénane, la gomme de karaya, la gomme arabique, la pectine, la cellulose, l'hydroxycellulose, l'hydroxyalkylcellulose, l'hydroxyéthylcellulose, la carboxyméthylhydroxyéthylcellulose, l'hydroxypropylcellulose, et une combinaison de l'un quelconque des composés précédents ;
ladite couche comprenant un guar cationique ; et
ladite composition d'enrobage de semences ayant une taille sensiblement uniforme comprise entre 10 micromètres et 4 mm de diamètre.

2. Composition d'enrobage de semences selon la revendication 1, comprenant en outre un liant.

3. Composition d'enrobage de semences selon la revendication 2, ledit liant étant choisi dans le groupe constitué par la mélasse, le sucre granulé, les alginates, la gomme de karaya, la gomme jaguar, la gomme adragante, la gomme polysaccharide, le mucilage et toute combinaison de ceux-ci.

4. Composition d'enrobage de semences selon la revendication 2, ledit liant étant choisi dans le groupe constitué par la gélatine, les acétates de polyvinyle, les copolymères d'acétate de polyvinyle, les alcools polyvinyliques, les copolymères d'alcool polyvinylique, les celluloses (y compris les éthylcelluloses et les méthylcelluloses, les hydroxypropylcelluloses, les hydroxyméthylcelluloses, les hydroxyméthylpropylcelluloses), les polyvinylpyrolidones, les dextrines, les maltodextrines, les polysaccharides, les graisses, les huiles, les protéines, la gomme arabique, les gommes laques, le chlorure de vinylidène, les copolymères de chlorure de vinylidène, les lignosulfonates de calcium, les copolymères acryliques, les amidons, l'amidon cationique, les polyvinylacrylates, les zéines, la carboxyméthylcellulose, le chitosane, l'oxyde de polyéthylène, les polymères et copolymères d'acrylimide, l'acrylate de polyhydroxyéthyle, les monomères de méthylacrylimide, l'alginate, l'éthylcellulose, le polychloroprène, les sirops et toute combinaison de ceux-ci.

5. Composition d'enrobage de semences selon la revendication 1, comprenant en outre au moins un ingrédient actif.

6. Composition d'enrobage de semences selon la revendication 5, ledit au moins un ingrédient actif étant choisi dans le groupe constitué par les herbicides, les régulateurs de croissance de plantes, les dessicants pour cultures, les fongicides, les bactéricides, les bactériostatiques, les insecticides, les insectifuges, les herbicides de triazine, les herbicides de sulfonylurée, les uraciles, les herbicides d'urée, les herbicides d'acétanilide, les herbicides d'organophosphonate, les sels de glyphosate, les esters de glyphosate, les fongicides de nitrilo-oxime, les fongicides d'imidazole, les fongicides de triazole, les fongicides de sulfénamide, les fongicides de dithio-carbamate, les composés aromatiques chlorés, les fongicides de dichloroaniline, les insecticides de carbamate, les insecticides d'organo-thiophosphate ; les insecticides organiques perchlorés, le méthoxychlore, les acaricides, le sulfite de propynyle, les acaricides de triazapentadiène, les acaricides aromatiques chlorés, le tétradifan, les acaricides de dinitrophénol, le binapacryle, les adjuvants, les tensioactifs, les engrais et tout mélange de ceux-ci.

7. Composition d'enrobage de semences selon la revendication 1, ledit guar cationique étant du guar hydroxypropyle cationique.

8. Composition d'enrobage de semences selon la revendication 1, comprenant en outre au moins une charge.

9. Composition d'enrobage de semences selon la revendication 8, ladite au moins une charge étant choisie dans le groupe constitué par les farines de bois, les argiles, le charbon actif, les glucides, les sucres, les dextrines, les maltodextrines, la terre de diatomées, les farines de céréales, la farine de blé, la farine d'avoine, la farine d'orge, les solides inorganiques à grains fins, le carbonate de calcium, la bentonite de calcium, le kaolin, l'argile de porcelaine, le talc, la perlite, le mica, la vermiculite, les silices, la poudre de quartz, la montmorillonite et les mélanges de ceux-ci.

10. Composition d'enrobage de semences selon la revendication 1, ladite au moins une semence étant une agglomération de deux semences ou plus.

11. Procédé de préparation d'une composition d'enrobage de semences comprenant les étapes de :
fourniture d'au moins une graine ;
fourniture d'au moins un guar cationique ; et
mise en contact du guar cationique avec la semence pour enrober tout ou une partie de la semence ;
ladite composition d'enrobage de semences ayant une taille sensiblement uniforme comprise entre 10 micromètres et 4 mm de diamètre.

12. Procédé selon la revendication 11, comprenant en outre l'étape de formation d'une agglomération de deux semences ou plus en appliquant un agent d'agglomération sur deux semences ou plus.

13. Procédé selon la revendication 12, ladite agglomération contenant moins de 100 semences, de préférence moins de 25 semences, et idéalement moins de 10 semences.

14. Composition d'enrobage comprenant :
au moins un ingrédient actif choisi dans le groupe constitué par les herbicides, les régulateurs de croissance de plantes, les dessicants pour cultures, les fongicides, les bactéricides, les bactériostatiques, les insecticides, les insectifuges, les herbicides de triazine, les herbicides de sulfonylurée, les uraciles, les herbicides d'urée, les herbicides d'acétanilide, les herbicides d'organophosphonate, les sels de glyphosate, les esters de glyphosate, les fongicides de nitrilo-oxime, les fongicides d'imidazole, les fongicides de triazole, les fongicides de sulfénamide, les fongicides de dithio-carbamate, les composés aromatiques chlorés, les fongicides de dichloroaniline, les insecticides de carbamate, les insecticides d'organo-thiophosphate, les insecticides organiques perchlorés, le méthoxychlore, les acaricides, le sulfite de propynyle, les acaricides de triazapentadiène, les acaricides aromatiques chlorés, le tétradifan, les acaricides de dinitrophénol, le binapacryle, les adjuvants, les tensioactifs, les engrais et tout mélange de ceux-ci ; et
au moins une couche enrobant tout ou partie de l'ingrédient actif, la couche étant choisie dans le groupe constitué par le guar, le guar hydroxypropyle cationique, le polyacrylamide, l'acide polyméthacrylique, l'acide polyacrylique, le polyacrylate, le polyéthylène glycol, les polymères à extrémité bloquée par un groupe phosphonate, l'oxyde de polyéthylène, l'alcool polyvinylique, le polyglycérol, le polytétrahydrofurane, le polyamide, le guar hydroxypropyle, le guar carboxyméthyle, le guar carboxyméthylhydroxypropyle, l'amidon, l'amidon cationique, l'amidon de maïs, l'amidon de blé, l'amidon de riz, la fécule de pomme de terre, le tapioca, le maïs cireux, le sorgho, le sorghum cireux, le sagou, la dextrine, la chitine, le chitosane, les compositions d'alginate, la gomme de xanthane, la gomme de carraghénane, la gomme de karaya, la gomme arabique, la pectine, la cellulose, l'hydroxycellulose, l'hydroxyalkylcellulose, l'hydroxyéthylcellulose, la carboxyméthylhydroxyéthylcellulose, l'hydroxypropylcellulose, et toute combinaison des composés précédents ;
ladite couche comprend un guar cationique.
